(19) **Europäisches Patentamt**
**European Patent Office**
**Office européen des brevets**

(11) **EP 4 675 569 A1**

(12) **EUROPEAN PATENT APPLICATION**

(43) Date of publication:
**07.01.2026 Bulletin 2026/02**

(21) Application number: **24185962.8**

(22) Date of filing: **02.07.2024**

(51) International Patent Classification (IPC):
**G06V 10/44** (2022.01)    **G06N 3/045** (2023.01)
**G06V 10/82** (2022.01)    G06N 3/084 (2023.01)

(52) Cooperative Patent Classification (CPC):
**G06V 10/82; G06N 3/045; G06V 10/454;**
G06N 3/084

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(71) Applicant: **AUMOVIO Autonomous Mobility
Germany GmbH
85057 Ingolstadt (DE)**

(72) Inventor: **Kadar, Attila
1092 Budapest (HU)**

(74) Representative: **Aumovio Corporation
AUMOVIO Germany GmbH
Taunusstraße 36
80807 München (DE)**

(54) **TRAINING METHOD FOR OBJECT DETECTORS**

(57) The present invention is concerned with a computer-implemented method for training an object detector (OD), an object detector (OD), a computer program and a computer-readable (storage) medium. To carry out the method a set of object classes (C) confused by the neural network (NN), an object feature map (FM) from the neural network (NN), and an object class label ($L_O$) comprising object classes (C) assigned to each object (O) in the object feature map (FM) are obtained. Subsequently, a training head (TH) configured to determine a truthfulness of an object class (C) assigned to an object (O) in an object feature map (FM) based on an object feature map (FM) and an object class label ($L_O$) is added to the neural network (NN). Based on the set of object classes (C) and the object class label ($L_O$) a modified object class label ($L_O'$) for which at least one object class assignment (C) is modified is determined. This modified object class label ($L_O'$) together with the object feature map (FM) is processes through the neural network generating an output which is compared with a truthfulness label ($L_T$) comprising the indication of the truthfulness of each object class (C) of the modified object class label ($L_O'$) by using a first objective function ($OF_1$). Network parameters are then updated based on the comparison.

Fig. 2

EP 4 675 569 A1

**Description**

The present invention is concerned with a computer-implemented method for training an object detector comprising at least one neural network embodied to detect at least two different object classes based on input data relating to a scene depicting at least one object to be detected, a trained object detector, a computer program and a computer-readable (storage) medium. The method and the object detector suggested may preferably be used in an advanced driver assistance system.

Object detection is widely used in various computer vision tasks and refers to localizing and classifying objects according to semantic categories, i.e. determining the location and type of an object. An object localization typically comprises a determination of a location of the object by demarcating it through a bounding box. A classification task refers to a categorization of an object to a specific object class based on special features of the object.

There are multiple techniques available for object detection including classical technical as well as techniques based on machine learning models, especially using neural networks. An overview of multiple object detection methods based on neural networks is provided in the article "Object Detection Using Deep Learning, CNNs and Vision Transformers: A Review" by A. B: Amjoud et al., published in IEEE Access, vol. 11, pp. 35479-35516, 2023, doi: 10.1109/ACCESS.2023.3266093.

A prominent application of object detection refers to advanced driver assistance systems (ADAS), which utilize object detection techniques for analyzing input data of various environmental sensors, e. g. radar sensors, lidar sensors, ultrasonic sensors or cameras. Typical ADAS functions on the one hand, serve to support the driver of a vehicle, while he maintains control of the vehicle. On the other hand, depending on the level of automation, a semi or fully autonomous driving may also be realized. Exemplary functions of advanced driver assistance systems are methods for recognizing various objects in a vehicle environment, methods to determine roadway lanes, or methods for lane keeping, breaking assistance functions or various parking assistance functions. Although the following description will make use of the example of object detection for advanced driver assistance system, the present invention is not at all limited to this specific application. Rather, it is applicable for any neural network based object detection method and application.

A frequent problem of object detectors utilizing neural networks is a confusion of similar object classes by the neural network. Such confusions lead to incorrect object classifications. Referring to an object detection of an advanced driver assistance system, for instance the object classes of bicycles and motorcycles may be confused. This in turn may result in an incorrect object velocity estimation and subsequently to incorrect functioning of a breaking assistance function.

There are several approaches to reduce class confusions of neural network based object detectors. Some approaches aim to reduce class confusions by extending the neural networks with additional modules. One example was suggested in "Confusion-Aware Convolutional Neural Network for Image Classification" by L. Yan et al., published 2019 in Gedeon, T., Wong, K., Lee, M. (eds) Neural Information Processing. ICONIP 2019, Lecture Notes in Computer Science(), vol 11953. Springer, Cham., doi: https://doi.org/10.1007/978-3-030-36708-4_13. An extension of the neural network with additional modules is provided and an ensemble method was applied. Several separate correction classifiers were trained which then are capable of correcting confusions of the original neural network used for the object detection task.

Another possible refers to an addition of visual attention to the neural network, as suggested by S. Jetley et al., in the article "Learn To Pay Attention" from 2018, available on arXiv, doi: arXiv: 1804.02391 v2. The addition of visual attention to the network helps to reduce class confusions by forcing the network to consider correlating features of objects belonging to the same class.

While the addition of modules to the neural network helps reducing object class confusion, such approach may especially be problematic if the object detector runs on limited hardware, especially on embedded hardware. Adding additional modules is connected with increased resource needs and also may lead to a significant runtime increase.

Besides, several different approaches were suggested, which reduce class confusions via the loss function applied during the training process, e. g. as described by X. Zhang et al. in "FocusNet: Classifying Better by Focusing on Confusing Classes" in 2022, available on arXiv doi: https://arxiv.org/pdf/2110.07307. Here, the original neural network is used to train a new neural network by minimizing a focus loss that aims to assign larger loss values to difficult, confusing objects by adding an attention-based loss component during the training process. The added loss component enables the neural network to generate higher probabilities over confused object classes while penalizing outputs of irrelevant object classes. Another example referring to a loss function modification was suggested in "DropMax: Adaptative Variational Softmax", published in 2022 by H. B. Lee et al., available on arXiv, doi: https://arxiv.org/pdf/1712.07834. An adaptive dropout is applied on a softmax activation function. The neural network model learns to retain confusing object classes with higher probability, while dropping "irrelevant" object class scores. That way, the hypotheses space is limited to a more meaningful subspace. Finally, the approach suggested in "Training Region-based Object Detectors with Online Hard Example Mining", published by A Shrivastava et al. in 2016, available on arXiv: doi: https://arxiv.org/abs/1604.03540, relies on the finding that an average training data set consists of many easy but only few difficult examples. Therefore, an algorithm was proposed, that selects difficult examples during the training process based on their loss value and provides a higher weight on these examples during backpropagation.

However, there are also several potential drawbacks for the approach of modifying the loss functions of changing the focus during the training process to reduce object class confusions: Upweighting the loss values for confusing object classes may result in a sub-optimal local minimum of the loss function. Especially, the expected value of the loss referring to not detecting anything may be smaller than an expected loss in accordance with object class confusions, i. e. the neural network achieves a reduced object confusion rate by detecting less objects. It may be challenging to find optimal loss ratios to avoid such local minimums, especially in case of complex applications, e. g. in multitasking computer vision systems involving object detection, sign recognition, classification, and regression tasks. Furthermore, by focusing the loss on confusing object classes, smaller (or zero) gradients may be propagated on detections not involving the confusing object classes, which reduces overall performance of the neural network, especially in earlier epochs. Numerous activations are suppressed by approaches which modify the loss function, so that the neural network is not capable to learn based on these suppressed activations at all. Moreover, unbalancing the loss function, and introducing bias to the loss function, may introduce a risk of overfitting and reduced generalization ability.

Based on the drawbacks of the different approaches as outlined in the introduction it is an object of the present invention to provide a reliable, resource effective possibility to reduce object class confusions of neural network based object detectors.

This objective problem is solved by the method according to claim 1, by the trained object detector according to claim 13, the computer program according to claim 14 and the computer-readable storage medium according to claim 15.

With regards to the method the objective problem underlying the present invention is solved by a computer-implemented method for training an object detector comprising at least one neural network and being embodied to detect at least two different object classes based on input data relating to a scene depicting at least one object to be detected.

A first step of the suggested method comprises obtaining a set of object classes confused by the neural network. The confused object classes may be determined by analyzing outputs of the neural network for different object classes. The term class confusion refers to a miss classification of an object to an object class, whereas the incorrect and correct object class are similar to each other. The similarity in this regard may be defined based on a set of common features for the two object classes.

A second step of the suggested method comprises obtaining an object feature map from the neural network, and an object class label comprising object classes assigned to each object contained in the object feature map. The object feature map refers to an output of one internal layer of the neural network and is a map depicting features represented in the image, whereas objects in the image are described by one or multiple of the determined features.

Subsequently, a training head is added to the neural network. The training head is configured to determine a truthfulness of an object class assigned to an object in an object feature map based on an object feature map and an object class label. The object class label is an input of the training head, which predicts whether the assigned label is correct or incorrect.

In a fourth step of the suggested method a modified object class label for which at least one object class assignment is modified, especially swapped, is determined based on the set of object classes and based on the object class label. Depending on the number of object classes that are confused or depending on a likelihood of confusion for certain object classes, one or multiple object classes of the object class label may be modified.

In addition, an indication of the truthfulness of each object class of the modified object class label is determined. The indication of the truthfulness may be determined together with the modified object class label.

A further step of the suggested method comprises generating an output of the training head for each object feature map and modified object class label by processing the object feature map and the modified object class label through one or more layers of the training head in accordance with parameters associated with the one or more layers.

Subsequently, the generated output for each object feature map and modified object class label is compared with a truthfulness label comprising the indication of the truthfulness of each object class of the modified object class label by using a first objective function. The objective function preferably is a loss function applied in the training process.

Finally, said parameters and parameters of the neural network are updated based on the comparison.

The neural network may be trained by using the suggested method or also may be pre-trained by another training process, e. g. involving supervised, semi-supervised or unsupervised learning.

The training head is only added during the training process and not needed in the inference phase of the neural network. That way, the object detector trained according to the suggested method may be deployed on limited hardware, especially on embedded hardware. Moreover, no bias is introduced due to a modification of applied loss functions.

In a preferred embodiment the method further comprises the steps of:

- receiving training data relating to a scene depicting at least one object to be detected;
- receiving an indication of an object class of the object to be detected represented in the training data;
- generating an output of the neural network and training head for each training data by processing the training data through one or more layers of the neural network and training head in accordance with parameters associated with the one or more layers;

- comparing the generated output for each training data with a training object label comprising the indication of the object class of the object to be detected represented in the training data by using a second objective function, and
- updating said parameters based on the comparison.

Accordingly, the neural network and training head can also be trained together or simultaneously. In this case, the entire training of the neural network may be conducted together with the training head, or it is also possible to start based on a pre-trained neural network. The object class label serves for training of the neural network and for determining the modified object class label based thereon.

The training head is advantageously trained and used for reducing the class confusions of the neural network at the same time.

It is possible to provide the input for training the neural network and the training head at least in part separately. However, it is also possible to provide a combined input to the neural network, e. g. by concatenation of the different inputs.

It is of advantage, if the first objective function and the second objective function are combined to a joint objective function, in particular wherein a sum or product if the first and second objective function serves as the joint objective function.

Preferably, the neural network is a convolutional neural network comprising multiple convolutional layers. Several known object detectors are based on one or multiple neural networks.

It is as well preferred, if the object detector is based on a CenterNet or a YOLO network. The CenterNet was suggested by K. Duan et al. in "CenterNet: Keypoint Triplets for Object Detection" in 2019, available on arXiv: doi: arXiv:1904.08189. The YOLO network, on the other hand, was suggested by J. Redmon et al. in "You Only Look Once: Unified, Real-Time Object Detection" in 2015, available as well on arXiv, doi: arXiv:1506.02640.

According to one embodiment of the suggested method the training head comprises at least one convolutional layer, especially less than ten convolutional layers, preferably less than five convolutional layers. It is preferred, depending on the application, to minimize the number of convolutional layers of the training head.

According to another embodiment of the present invention, the training head is added between a feature map portion and an output portion of the neural network, whereas each of the feature map portion and the output portion comprises one or multiple, preferably convolutional, layers.

In principle, the training head may be added to the neural network between any two layers of the feature map portion, whereas the feature map portion comprises one or multiple convolutional layers with outputs in the form of object feature maps. Preferably, the training head is added between the last layer of the feature map portion and the first layer of the output portion.

Besides the feature map portion and the output portion, the neural network may comprise further portions, e. g. an input portion and/or a pooling portion, whereas each portion comprises one or multiple layers.

It is of advantage, if the first objective function is a binary cross-entropy loss function or a mean squared error loss function. These loss functions have a high efficiency for binary classification tasks as it is the case for the determination of the truthfulness of an assigned object class.

The second objective function may be any suitable loss function, e. g. a categorical cross entropy loss function, a focal loss function, or a mean squared error loss function.

If the first and second loss function are combined to a joint loss function, it is preferred if the joint loss function is a linear combination of the first and second loss function.

A preferred embodiment of the suggested method comprises that the modified object class label is varied during the training process. This embodiment refers to an adversarial training process with an adaptive modification strategy. Such adaptive training process is especially efficient in reducing object class confusions of the neural network. Another advantage is that the suggested method according to this embodiment may be regarded as a randomized data augmentation method because different modified object class labels may be generated for one input training data in each training epoch. That way, a generalization ability and robustness of the neural network can be further increased.

Another preferred embodiment comprises, that obtaining the set of object classes confused by the neural network comprises conducting a statistical analysis and comparison of outputs of the neural network with respect to similar object classes determined by the neural network. Preferably, the set of object classes confused by the neural network is obtained prior to its training.

In this regard, it is of advantage, if similar object classes for which a false assignment to the object class by the neural network exceeds a predetermined threshold are selected for the set of object classes confused by the neural network. It is also possible to determine probabilities of false detections for the different object classes and chose those object classes with the highest probabilities for the set. Furthermore, the object classes to be detected may also be analyzed with respect to their common features.

The method according to the present invention is preferably used for training an object detector, especially an object detector implemented in an advanced driver assistance system. Further exemplary applications of the method are given by applications for autonomous devices in factories, e.g. automated fork lifting devices, or in medical imaging.

The problem underlying the present invention is further solved by means of a trained object detector comprising at least one neural network embodied to detect at least two different object classes based on input data relating to a scene depicting at least one object to be detected, wherein the trained object detector is trained by carrying out the suggested method according to any of the embodiments described. The trained object detector is preferably stored on a computer-readable (storage) medium.

Finally, the problem underlying the present invention is also solved by means of a computer program comprising instructions, which, when the program is executed by a computer, cause the computer to carry out the suggested method according to any of the embodiments described and by a computer-readable (storage) medium comprising instructions executable by at least one processor to perform the suggested method according to any of the embodiments described or on which the computer program according to the present invention is stored.

The embodiments described in connection with the method are also applicable to the trained object detector, the computer program and to the computer readable (storage) medium.

In summary, the present invention allows to remove class confusions in object detectors while avoiding the need of adding components to the neural network during the inference phase and a modification of the applied loss functions or objective functions. Thus, the number of true positive rates of the neural network is not decreased.

The present invention and its preferred embodiments will be further described based on the subsequent figures.

Fig. 1 shows a schematic drawing of an object detector based on a neural network with attached training head;

Fig. 2 shows a flow diagram of a preferred embodiment of the method according to the present invention; and

Fig. 3 illustrates the determination of a modified object class label.

In the figures, the same elements are always provided with the same reference symbols.

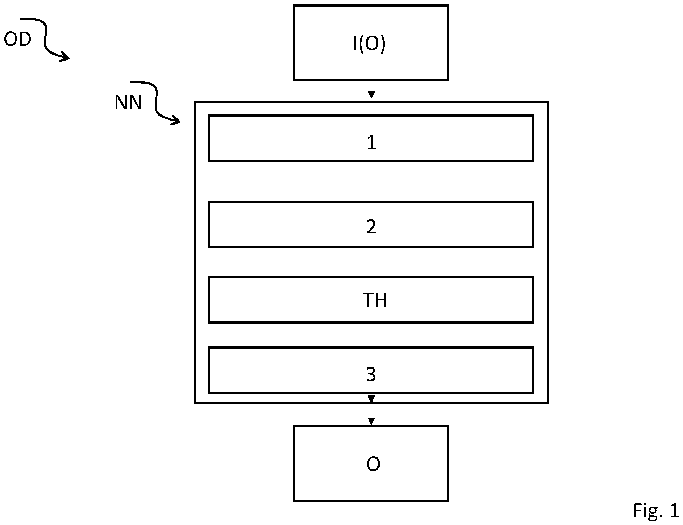

In Fig. 1 a schematic drawing of an object detector OD based on a neural network NN with attached training head TH is shown. The neural network NN preferably is a convolutional neural network CNN.

For the embodiment shown in Fig. 1 the neural network NN is embodied to detect at least two different object classes C based on input data I relating to a scene depicting at least one object O to be detected. Thus, the neural network NN determines the objects O belonging to the object classes C.

The network NN exemplarily comprises an input portion 1, a feature map portion 2 and an output portion 3. The training head is attached to the network NN between the feature map portion 2 and the output portion 3.

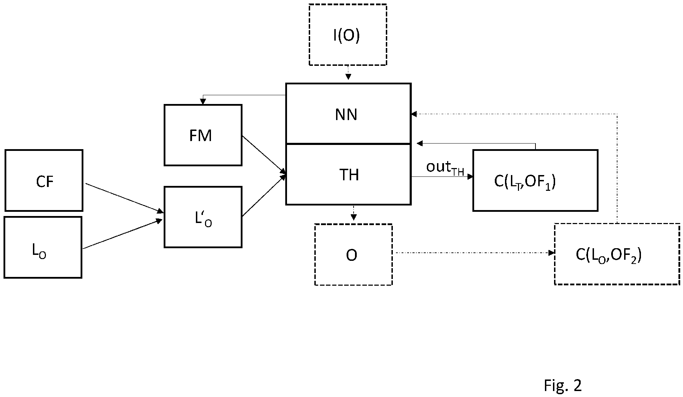

A preferred embodiment of the suggested method for training an object detector OD, for instance the one shown in Fig. 1, is illustrated by the block diagram in Fig. 2. The neural network NN may be trained by means of the suggested method or may be pre-trained.

Based on a set of class confusions CF of the neural network NN and based on an object class label Lo corresponding to an object feature map FM obtained from the neural network NN a modified object class label Lo' is determined.

The object feature map FM is obtained by processing input data I(O) depicting at least one object O to be detected through one or more layers of the neural network NN. The object class label $L_0$ comprises an indication of the object classes C assigned to each object O contained in the input data I(O) or the object feature map FM respectively.

Both, the object feature map FM and the modified object class label Lo' are provided as an input to the training head TH. The training head TH processes the input through one or more of its layers and provides an output $out_{TH}$ in the form of a determined truthfulness of an object O assignment of the modified object feature map $L_O$'. This output $out_{TH}$ is compared with a truthfulness label $L_T$ comprising an indication of the truthfulness of each of the assigned object classes C of the modified object class label Lo' by using a first objective function $OF_1$ and parameters of the training head TH and neural network NN are then updated based on the comparison.

It is also possible to train the neural network NN at the same time, which is illustrated by the components in Fig. 2 in dashed lines. In this case, training data I(O) relating to a scene depicting at least one object O to be detected is provided as input to the neural network NN and an output O of the neural network NN is produced by processing the training data through one or more layers of the neural network.

The generated output O is compared with an object class label LO comprising an indication of the correct object class C of the object O represented in the training data by using a second objective function $OF_2$. Again, parameters of the neural network NN are then also updated based on the comparison using the second objective function OF2. In case, the neural network NN is trained in the way described, it is also possible to combine the first $OF_1$ and second objective function $OF_2$ to a joint objective function.

In summary, for each object O depicted in the input data I, the training head TH receives as input a feature map FM and the modified object class label Lo', for which the assigned object classes C may be true or false. The training head TH is configured to determine, whether the assigned object classes C of the modified object class label $L_O$' are true or false.

By randomly changing the object class labels Lo of the object classes O with high similiarity, i.e. those object classes C frequently confused by the neural network NN, the training process of the neural network NN has a focus on those features, which make the similar object classes C different. After finishing the training procedure of the neural network NN, the training head TH may be removed, so the neural network NN architecture remains unchanged in the inference phase. Because the truthfulness of the assigned object classes C of the object class label LO does not rely on a detection of the respective object O, the suggested method reduces object class C confisuons of neural networks NN without unbalancing the object detection loss and without impacting the detection quality (true positive rate).

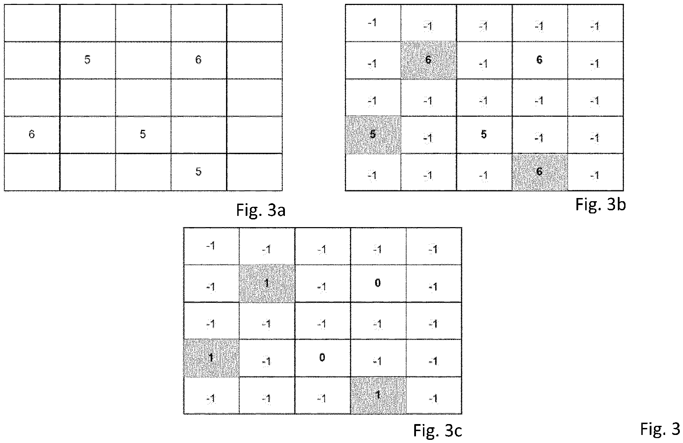

The determination of a modified object class label $L_O'$ is further illustrated based on Fig. 3. The modified object class label Lo' may be handcrafted or (semi-) automatically be computed. A preferred example for an algorithm useful to determine a modified object class label Lo' is explained below:

Assuming that

$$F \in \mathbb{R}^{w \times h \times f}$$

is a feature space of the neural network NN comprising f features at each pixel of exemplary input data in the form of images depicting a vehicle environment showing at least one object; w and h are a width and height of the feature map FM;

$\Omega_c$ corresponds to a set of object classes Co frequently confused by the neural network, e. g. determined by a prior analysis;

$X \sim Bern(p)$ is a random variable being 1 with a probability p and 0 otherwise; and

$$\alpha \overset{\$}{\leftarrow} \Omega$$

is a uniform sampling from set $\Omega$.

Then, the modified object class label $L_O' \in \mathbb{R}^{w \times h \times 1}$ may e. g. be defined as:

$$L'_{O,i,j} = \begin{cases} C, & if\ C \in L_{O,i,j}\ and\ \Omega_c \neq \emptyset\ and\ X = 0 \\ \alpha_c \overset{\$}{\leftarrow} \Omega_c, & if\ C \in L_{O,i,j}\ and\ \Omega_c \neq \emptyset\ and\ X = 1 \\ -1, & if\ \Omega_c = \emptyset\ or\ no\ L_{O,i,j}\ present) \end{cases}$$

i and j refer to the output pixel, C refers to the object class, and Lo refers to the corresponding object class label and therefore to the ground truth object class. The modified object class label Lo' comprises the object class C if this class does not belong the set of object classes C confused by the neural network NN, while the object classes O of object classes C belonging to the set are modified, especially swapped.

The algorithm thus randomly chooses several objects O depicted in the input training data and modifies, especially swappes, their assigned object class labels Lo. Preferably, those objects O and corresponding object classes C are chosen, which are frequently confused by the neural network NN.

The truthfullness label $L_T \in \mathbb{R}^{w \times h \times 1}$ may be defined in accordance with the modified object class label $L_O$' as follows:

$$L_{t,i,j} = \begin{cases} 1, & if\ L'_{O,i,j} = C \\ 0, & if\ L'_{O,i,j} \neq -1\ and\ L'_{O,i,j} \neq C \\ -1, & if\ L'_{O,i,j} = -1 \end{cases}$$

The truthfulness label $L_T$ at a specific coordinate i,j equals one if the object label Lo was modified, 0 if it was not modified, and -1 for irrelevant pixels.

Fig. 3a shows an object class label Lo in the form of a pixel map indicating two object classes C=5 and C=6 which are frequently confused by a neural network NN. Fig. 3b shows a corresponding modifed object class label Lo', whereas three modified object classes C are highlighted in grey. The modification is carried out by the method explained above.

Based on the modification process, the truthfulness label $L_T$ may also be determined, which is illustrated in Fig. 3, again highlighting the three modified object classes C.

It shall be noted, that various further possibilities exist which may be used for the modification of the object class label Lo. The one illustrated in connection with Fig. 3 is only one examplary possibility. The specific modification strategy especially may be chosen e. g. depending on the set of object classes C frequently confused by the neural network (e. g.

characteristic features of the object classes, number of the object classes contained in the set), by the confusion rates, or the probabilitis of false assignments of object classes C for those classes C contained in the set.

**Claims**

1. Computer-implemented method for training an object detector (OD) comprising at least one neural network (NN) embodied to detect at least two different object classes (C) based on input data (I(O)) relating to a scene depicting at least one object (O) to be detected, the method comprising the steps of:

   - obtaining a set of object classes (C) confused by the neural network (NN);
   - obtaining an object feature map (FM) from the neural network (NN), and an object class label (Lo) comprising object classes (C) assigned to each object (O) contained in the object feature map (FM);
   - adding a training head (TH) to the neural network (NN), the training head (TH) being configured to determine a truthfulness of an object class (C) assigned to an object (O) in an object feature map (FM) based on an object feature map (FM) and an object class label (Lo);
   - determining based on the set of object classes (C) and based on the object class label (Lo) a modified object class label (Lo') for which at least one object class assignment (C) is modified, especially swapped;
   - determining an indication of the truthfulness of each object class (C) of the modified object class label (Lo');
   - generating an output of the training head (TH) for each object feature map (FM) and modified object class label (Lo') by processing the object feature map (FM) and the modified object class (Lo') label through one or more layers of the training head (TH) in accordance with parameters associated with the one or more layers;
   - comparing the generated output for each object feature map (FM) and modified object class label (Lo') with a truthfulness label ($L_T$) comprising the indication of the truthfulness of each object class (C) of the modified object class label (Lo') by using a first objective function ($OF_1$), and
   - updating said parameters and parameters of the neural network (NN) based on the comparison.

2. The method according to claim 1, further comprising the steps of

   - receiving training data (I) relating to a scene depicting at least one object (O) to be detected;
   - receiving an indication of an object class (C) of the object (O) to be detected represented in the training data (I);
   - generating an output of the neural network (NN) and training head (TH) for each training data (I) by processing the training data (I) through one or more layers of the neural network (NN) and training head (TH) in accordance with parameters associated with the one or more layers;
   - comparing the generated output for each training data (I) with an object class label (Lo) comprising the indication of the object class (C) of the object (O) to be detected represented in the training data (I) by using a second objective function ($OF_2$), and
   - updating said parameters based on the comparison.

3. The method according to claim 2, wherein the first objective function ($OF_1$) and the second objective function ($OF_2$) are combined to a joint objective function, in particular wherein a sum or product of the first ($OF_1$) and second objective function ($OF_2$) serves as the joint objective function.

4. The method according to any of the preceding claims, wherein the neural network (NN) is a convolutional neural network.

5. The method according to any of the preceding claims, wherein the object detector (OD) is based on a CenterNet or a YOLO network.

6. The method according to any of the preceding claims, wherein the training head (TH) comprises at least one convolutional layer, especially less than ten convolutional layers, preferably less than five convolutional layers.

7. The method according to any of the preceding claims, wherein the training head (TH) is added between a feature map portion (2) and an output portion (3) of the neural network (NN), whereas each of the feature map portion (2) and the output portion (3) comprises one or multiple, preferably convolutional, layers.

8. The method according to any of the preceding claims, wherein the first objective function ($OF_1$) is a binary cross-entropy loss function or a mean squared error loss function.

9. The method according to any of the preceding claims, wherein the modified object class label (Lo') is varied during the training process.

10. The method according to any of the preceding claims, wherein obtaining the set of object classes (C) confused by the neural network (NN) comprises conducting a statistical analysis and comparison of outputs of the neural network (NN) with respect to similar object classes (C) determined by the neural network (NN).

11. The method according claim 10, wherein similar object classes (C) for which a false assignment to the object class (C) by the neural network (NN) exceeds a predetermined threshold are selected for the set of object classes (C) confused by the neural network (NN).

12. Use of the method according to any of the preceding claims for training an object detector (OD), especially an object detector (OD) implemented in an advanced driver assistance system.

13. Trained Object Detector (OD) comprising at least one neural network (NN) embodied to detect at least two different object classes (C) based on input data (I) relating to a scene depicting at least one object (O) to be detected, wherein the trained object detector (C) is trained by carrying out the method according to any of the claims 1-11.

14. Computer program comprising instructions, which, when the program is executed by a computer, cause the computer to carry out the method of any of the claims 1-11.

15. Computer-readable (storage) medium comprising instructions executable by at least one processor to perform the method of any of the claims 1-11 or on which the computer program according to claim 14 is stored.

Fig. 1

Fig. 2

| | | | | |
|---|---|---|---|---|
| | | | | |
| | 5 | | 6 | |
| | | | | |
| 6 | | 5 | | |
| | | | 5 | |

Fig. 3a

| | | | | |
|---|---|---|---|---|
| -1 | -1 | -1 | -1 | -1 |
| -1 | 6 | -1 | 6 | -1 |
| -1 | -1 | -1 | -1 | -1 |
| 5 | -1 | 5 | -1 | -1 |
| -1 | -1 | -1 | 6 | -1 |

Fig. 3b

| | | | | |
|---|---|---|---|---|
| -1 | -1 | -1 | -1 | -1 |
| -1 | 1 | -1 | 0 | -1 |
| -1 | -1 | -1 | -1 | -1 |
| 1 | -1 | 0 | -1 | -1 |
| -1 | -1 | -1 | 1 | -1 |

Fig. 3c

Fig. 3

Europäisches
Patentamt
European
Patent Office
Office européen
des brevets

**EUROPEAN SEARCH REPORT**

Application Number

EP 24 18 5962

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | YAN LIGUANG ET AL: "Confusion-Aware Convolutional Neural Network for Image Classification", 9 December 2019 (2019-12-09), 20191209, PAGE(S) 151 - 161, XP047532391, [retrieved on 2019-12-09] * Figures: 2, 3, 4 ; 3.2- 3.5 ; 4 ; 2.3 * | 1-15 | INV. G06V10/44 G06N3/045 G06V10/82 ADD. G06N3/084 |
| A | DUAN KAIWEN ET AL: "CenterNet: Keypoint Triplets for Object Detection", 2019 IEEE/CVF INTERNATIONAL CONFERENCE ON COMPUTER VISION (ICCV), IEEE, 27 October 2019 (2019-10-27), pages 6568-6577, XP033724089, DOI: 10.1109/ICCV.2019.00667 [retrieved on 2020-02-24] | 1 | |
| A | XUE ZHANG ET AL: "FocusNet: Classifying Better by Focusing on Confusing Classes", ARXIV.ORG, CORNELL UNIVERSITY LIBRARY, 201 OLIN LIBRARY CORNELL UNIVERSITY ITHACA, NY 14853, 20 April 2022 (2022-04-20), XP091194872, DOI: 10.1016/J.PATCOG.2022.108709 | 1 | TECHNICAL FIELDS SEARCHED (IPC) G06V G06N |

The present search report has been drawn up for all claims

| Place of search | Date of completion of the search | Examiner |
|---|---|---|
| The Hague | 8 November 2024 | Versluis, Anton |

EPO FORM 1503 03.82 (P04C01)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **A. B: AMJOUD et al.** Object Detection Using Deep Learning, CNNs and Vision Transformers: A Review. *IEEE Access*, 2023, vol. 11, 35479-35516
- Confusion-Aware Convolutional Neural Network for Image Classification. **L. YAN et al.** Neural Information Processing. ICONIP 2019, Lecture Notes in Computer Science. Springer, Cham., 2019, vol. 11953
- **S. JETLEY et al.** Learn To Pay Attention'' from 2018. *arXiv*

- **X. ZHANG et al.** *FocusNet: Classifying Better by Focusing on Confusing Classes*, 2022
- **H. B. LEE et al.** DropMax: Adapative Variational Softmax. *arXiv*, 2022
- **A SHRIVASTAVA et al.** Training Region-based Object Detectors with Online Hard Example Mining. *arXiv*, 2016
- **K. DUAN et al.** CenterNet: Keypoint Triplets for Object Detection. *arXiv*, 2019
- **J. REDMON et al.** You Only Look Once: Unified, Real-Time Object Detection. *arXiv*, 2015